# EUROPEAN PATENT SPECIFICATION

(11) **EP 1 550 581 B1**
(45) Date of publication and mention of the grant of the patent: **24.09.2008**
(21) Application number: 04735102.8
(22) Date of filing: 27.05.2004
(51) Int. Cl.: B60R 1/074

(54) **MIRROR DEVICE FOR VEHICLE**
SPIEGELVORRICHTUNG FÜR FAHRZEUG
RETROVISEUR DE VEHICULE

(30) Priority: 27.05.2003 JP 2003148857; 26.02.2004 JP 2004052075
(43) Date of publication of application: 06.07.2005
(73) Proprietor: ICHIKOH INDUSTRIES LIMITED, Shinagawa-ku, Tokyo 141-8627 (JP)
(72) Inventor: ONUKI, Hiroyasu, Tokyo (JP)
(74) Representative: Grünecker, Kinkeldey, Stockmair & Schwanhäusser Anwaltssozietät
(86) International application number: PCT/JP2004/007636
(87) International publication number: WO 2004/106115

(56) References cited:
- JP-A- 9 207 666
- JP-A- 9 207 671
- US-A- 4 444 466
- US-A- 4 696 555

## Description

The present invention relates to a mirror device for a vehicle according to the preamble of claim 1.

Such a mirror device for a vehicle is already known from JP 9 207 666A. Said document discloses a hollow shaft that is provided with a mirror base fixed to a vehicle body, a housing which houses a motor for swinging a mirror unit and a cover for covering the housing.

JP 9 207 671 A also discloses a mirror device for a vehicle comprising a hollow shaft that is provided with a mirror base fixed to a vehicle body, a housing which houses a motor and a cover for covering the housing.

US 4 696 555 A refers to an electric remote control mirror apparatus comprising a pivotably supporting means which is fixed within a mirror housing for pivotably supporting the mirror body. Moreover, said document discloses an O-ring for stably supporting threaded rods and surely sealing the threaded rods from water and/or dust.

US 4 444 466 A describes a universal joint seal and a vibration damper for remotely actuated pivotal devices. Said document discloses a penetration or aperture which is disposed in a weather tight housing and a socket which is disposed on the housing surrounding the penetration. A circular elastomeric O-ring is disposed within the socket.

Heretofore, an electric mirror device for a vehicle, which automatically swings a mirror unit between a use position and a fold position by a driving device, such as a motor, is known. In such an electric mirror device, it is necessary to prevent rainwater or the like from coming into the device.

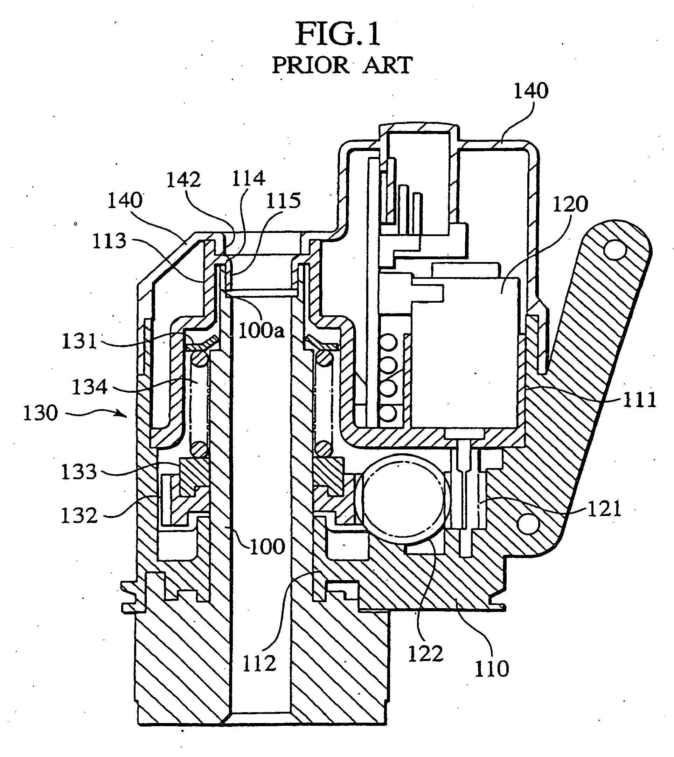

FIG. 1 shows a conventional mirror device for a vehicle having a waterproof structure (refer to, for example, Japanese Patent Application Laid-Open Publication No. 2002-274261).

As shown in FIG. 1, the mirror device for a vehicle has a shaft 100 as the fixed side by being projected integrally from a mirror base (not shown) fixed to a vehicle body, and a housing 110 rotatably supported around the shaft 100.

The shaft 100 is formed so as to have a hollow into which a harness (not shown) for supplying power to a motor 120 provided in the housing 110 is inserted.

The top surface of the housing 110 is opened, a motor base 111 is disposed in the housing 110, and the motor 120 is held in the motor base 111. The motor 120 is connected to a circuit board (not shown) provided in the housing 110 and is driven by power supplied from the harness (not shown). The housing 110 is turned around the shaft 100 by the driving of the motor 120, and a whole mirror unit, comprised of the housing 110 and a mirror (not shown), swings between the use position and the fold position.

The turn of the housing 110 is realized by disposing a speed reducing mechanism constructed by a worm wheel and a worm gear between an output shaft 121 of the motor 120 and the housing 110. In FIG. 1, reference numeral 122 denotes a worm wheel constructing a part of the speed reducing mechanism.

In the housing 110, a cylindrical supporting portion 112 is formed, and the shaft 100 penetrates the housing 110 in a state where it is in contact with the cylindrical supporting portion 112. Therefore, the housing 110 turns while the cylindrical supporting portion 112 slides along the shaft 100.

A clutch mechanism 130 is disposed so as to be along the axial line of the shaft 100 between the shaft 100 and the housing 110. The clutch mechanism 130, further, has a push nut 131 fit in the outer surface of the shaft 100, a clutch gear 132 and a clutch holder 133 through which the shaft 100 is extended, and a helical compression spring 134 in which the shaft 100 is inserted. The clutch gear 132 is rotatable around the shaft 100. The helical compression spring 134 is compressed by the clutch holder 133 and the push nut 131 and, by its elastic force, makes the clutch gear 132 and the clutch holder 133 engaged with each other.

The clutch mechanism 130 is provided to disengage the connection between the above speed reducing mechanism and the housing 110 at the time of swinging the mirror unit by manual operation to turn the mirror unit or when the mirror unit is swung by the action of some external force. Accordingly, the housing 110 can swing around the shaft 100 irrespective of the motor 120.

To prevent the entry of water to the motor 120, the housing 110 is covered with a cover 140. By the cover 140, the inside of the housing 110 is sealed. In addition, a waterproof structure is formed between a tip portion (upper end portion) of the shaft 100 and the cover 140.

In the waterproof structure, an outer cylindrical portion 113 extending upward along the shaft 100 is integrally formed with the motor base 111, a bending portion 114 bending from the outer cylindrical portion 113 toward the shaft 100 is formed and, further, a cylindrical inner thin portion 115 extending downward from the bending portion 114 is formed. In the cover 140, a folded portion 142 which is in contact with the tip portion of the outer cylindrical portion 113 and the bending portion 114 is formed. On the other hand, a tip portion 100a of the shaft 100 is formed thinly. The tip portion 100a is inserted between the outer cylindrical portion 113 and the inner cylindrical portion 115 to make the tip portion 100a, the inner cylindrical portion 115, and the outer cylindrical portion 113 overlap each other (hereinbelow, referred to as an overlap state) and, further, an end surface of the bending portion 114 comes into contact with the folded portion 142 of the cover 140, thereby preventing the entry of water while keeping the overlap state.

However, in the conventional waterproof structure, in order to keep the overlap state of the outer cylindrical portion 113, shaft 100, and inner cylindrical portion 115, the folded portion 142 is formed in the cover 140 and is made come into contact with the bending portion 114. Therefore, a dimension obtained by adding the thickness of the bending portion 114 to the length of the folded portion 142 is required in the axial direction of the shaft 100. Consequently, the structure has a problem that it is difficult to shorten the shaft 100.

To overlap with the shaft 100, it is necessary to form the outer cylindrical portion 113, bending portion 114, and inner cylindrical portion 115, so that the structure is complicated. Moreover, it also causes a problem that assembly is troublesome.

The present invention has been achieved in consideration of the problems of the prior art and its object is to provide a mirror device for a vehicle, having a shorter shaft and a simple structure, which can be easily assembled, and in which entry of water to a motor can be reliably prevented.

The above and other objects of the invention are achieved by a mirror device for a vehicle according to claim 1. Preferred embodiments are claimed in the dependent claims.
FIG. 1 is a cross sectional view showing a conventional structure.
FIG. 2 is a general cross sectional view of an embodiment of the present invention.
FIG. 3 is an enlarged cross sectional view of a portion III in FIG. 2.
FIG. 4 is a cross sectional view showing a state before a shaft is inserted in another embodiment of the invention.
FIG. 5 is a cross sectional view showing a state where the shaft is inserted in the another embodiment of the invention.
FIG. 6 is an enlarged cross sectional view of a portion corresponding to the portion III in FIG. 2 in further another embodiment of the invention.
FIG. 7 is a partial cut-away side view of a mirror device for a vehicle.

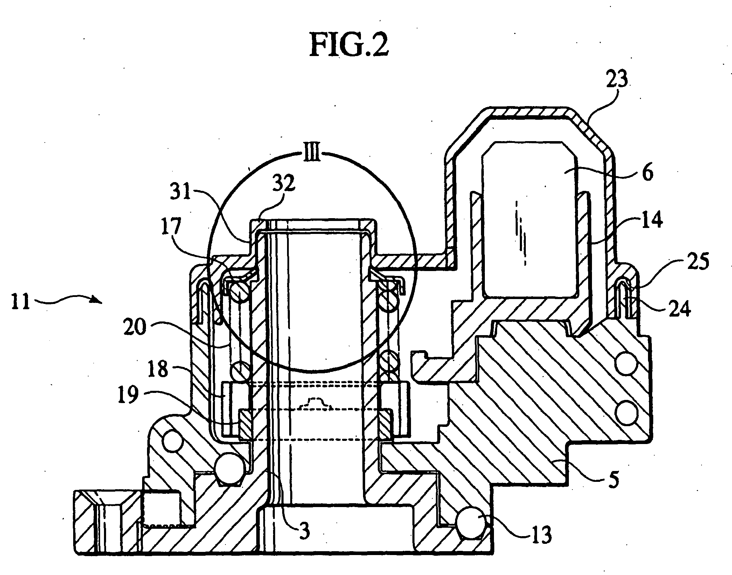

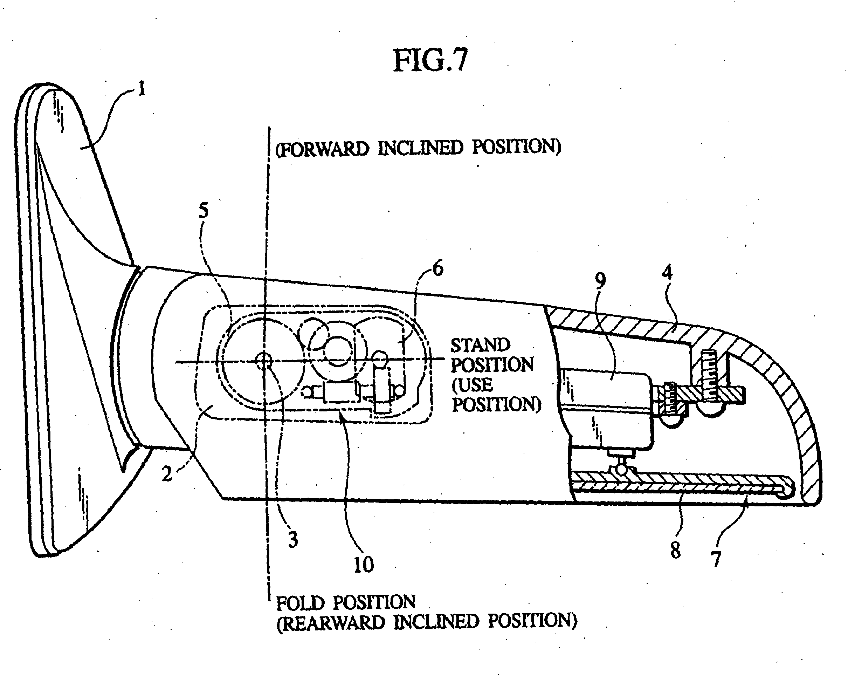

An embodiment of the present invention shown in FIG. 2 is applied to a mirror device for a vehicle shown in FIG. 7. First, a general configuration of the mirror device for a vehicle will be described with reference to FIG. 7.

In FIG. 7, a mirror base 1 is fixed to a body such as a door of a vehicle. The mirror base 1 has therein a shaft holder 2, and a shaft 3 as a fixed side is integrally projected from the shaft holder 2. A mirror unit 4 is swingably attached to the shaft 3. The mirror unit 4 swings between a use position (stand position) and a fold position (rearward inclined position). A housing 5 through which the shaft 3 penetrates is attached to the mirror unit 4, and a motor 6 for swinging the mirror unit 4 is provided in the housing 5. The housing 5 turns around the shaft 3 when power is supplied to the motor 6 and, by the turn, the mirror unit 4 swings between the stand position and the fold position. The rotational force of the motor 6 is transmitted to the housing 5 via a speed reducing mechanism 10.

The mirror unit 4 further includes a mirror assembly 7. The mirror assembly 7 has a mirror 8 and a power unit 9 for tilting the mirror 8. By supplying a drive signal to the power unit 9, the mirror 8 can be set at a desired angle.

In FIG. 7, in the case of turning the mirror unit 4 to the forward inclined position, it is performed manually. A clutch mechanism 11 for performing the switching is provided for the housing 5 (refer to FIG. 2).

As shown in FIG. 2, the shaft 3 on the side of the mirror base 1 penetrates the housing 5 in the axial direction. A ball 13 is disposed between the shaft 3 and the housing 5 and manual swing of the mirror assembly 7 (housing 5) around the shaft 3 is smoothly performed.

The housing 5 has a structure that the top thereof is opened. A motor holder 14 is fixed on the top of the housing 5 and the motor 6 is held in the motor holder 14. The shaft 3 is formed so as to have a hollow so that a harness (not shown) for supplying power to the motor 6 is inserted.

In the housing 5, a circuit board (not shown) for controlling the driving of the motor 6 is disposed, and the harness inserted in the shaft 3 is connected to the circuit board. The speed reducing mechanism 10 (refer to FIG. 7) including a worm wheel, a worm gear, and the like is coupled to an output shaft of the motor 6, and a final gear of the speed reducing mechanism 10 is coupled to the housing 5, thereby turning the housing 5 in the forward and reverse directions, respectively.

The shaft 3 penetrates the housing 5 in the axial direction, and the clutch mechanism 11 is disposed on the axis. The clutch mechanism 11 has a push nut 17 fit in the outer surface of the shaft 3, a clutch gear 18 and a clutch holder 19 through which the shaft 3 penetrates, and a helical compression spring 20 provided between the clutch gear 18 and the push nut 17.

The clutch gear 18 is rotatable around the shaft 3 and is adapted to engage with the clutch holder 19. The helical compression spring 20 is compressed by the push nut 17 and the clutch gear 18 and, by elastic force based on the compression, the clutch gear 18 and the clutch holder 19 are engaged with each other.

The clutch mechanism 11 is provided to disengage the connection between the speed reducing mechanism 10 and the housing 5 at the time of swinging the mirror unit 4 by manual operation to the forward inclined position or when the mirror unit 4 swings by some external force. With the configuration, the housing 5 (mirror unit 4) can swing to the front inclined position irrespective of the motor 6.

Next, a waterproof structure in the embodiment will be described. The housing 5 is covered with a cover 23 by which an inside of the housing 5 is sealed. The housing 5 is assembled to a cover 23 when a fitting projection 24 formed around the housing 5 is fit into a fitting groove 25 which is formed in a portion facing to the cover 23 and fits to the fitting projection 24. The portion except for the portion the shaft 3 penetrates in the cover 23 covers the top part of the housing 5, so that the entry of water into the housing 5 is prevented by the cover 23.

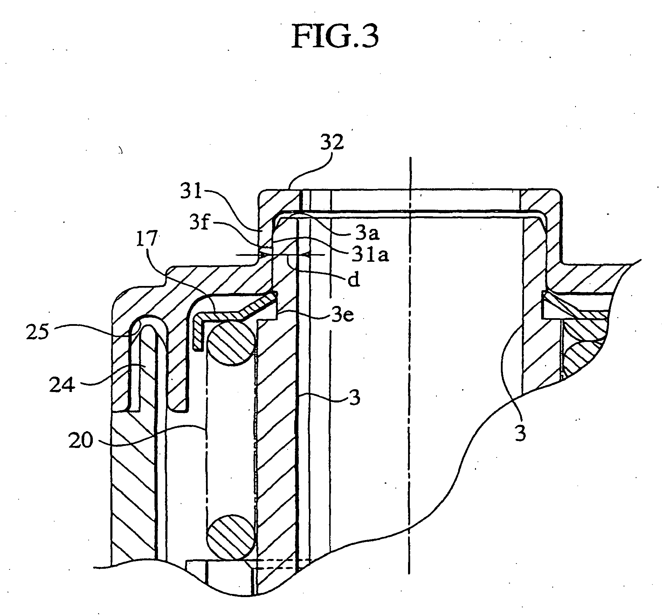

Further, in the portion where the shaft 3 is inserted in the cover 23, as shown in FIG. 3, a cylindrical portion 31 and an end portion cover 32 which is joined to the cylindrical portion 31 and covers the upper end of the cylindrical portion are formed. As described above, by forming the cylindrical portion 31 and the end portion cover 32, the insertion portion of the shaft 3 in the cover 23 has an L shape in cross section.

The cylindrical portion 31 extends in the axis direction of the shaft 3 and engages with the outer surface of the shaft 3 when the shaft 3 is inserted in the housing 5. In the embodiment, the cylindrical portion 31 reliably engages closely or with a small clearance so as to be rotatable relative to the shaft 3.

The end portion cover 32 bends from the tip of the cylindrical portion 31 toward the shaft 3, the end portion cover 32 is provided continuously from the tip of the cylindrical portion 31. The end portion cover 32 covers a penetration end surface 3a of the shaft 3 penetrating the housing 5. Consequently, the length of the end portion cover 32 provided continuously from the cylindrical portion 31 corresponds to the thickness of the shaft 3. In the embodiment, the thickness of the penetration end surface 3a of the shaft 3 is reduced via a step part 3e (thin portion), and the length of the end portion cover 32 is set to the length corresponding to the length "d" of the thin portion.

As described above, the cylindrical portion 31 of the cover 23 covering the housing 5 engages with the outer surface 3f of the shaft 3 and the end portion cover 32 covers the penetration end surface 3a of the shaft 3, thereby enabling the entry of water into the housing 5 from the space between the shaft 3 and the cover 23 to be prevented. In such a manner, the entry of water to the motor 6 can be prevented.

In such a structure, it is unnecessary to form the bending portion 114 for linking the outer cylindrical portion 113 and the inner cylindrical portion 115 as shown in FIG. 1 in a cover to prevent the entry of water. Consequently, the bending portion 114 can be omitted, and the length in the axial direction can be shortened commensurate to the length of the omitted bending portion 114. Thus, the shaft 3 can be shortened.

It also becomes unnecessary to insert the shaft between the outer cylindrical portion 113 and the inner cylindrical portion 115 to overlap them. Consequently, assembly can be facilitated with the simple structure and the entry of water to the motor can be reliably prevented.

Since the shaft 3 is held by the cover 23 via the cylindrical portion 31, the inclination of the shaft is suppressed and operability of the mirror can be improved.

With respect to the holding structure of the shaft 3, the shaft 3 is held by the cover 23 which does not exert any influence on the operation of the mirror as described above. Thus, the holding itself does not exert any adverse influence on the operation of the mirror and, moreover, high quality regarding the waterproof property and the operability of the mirror can be stably obtained.

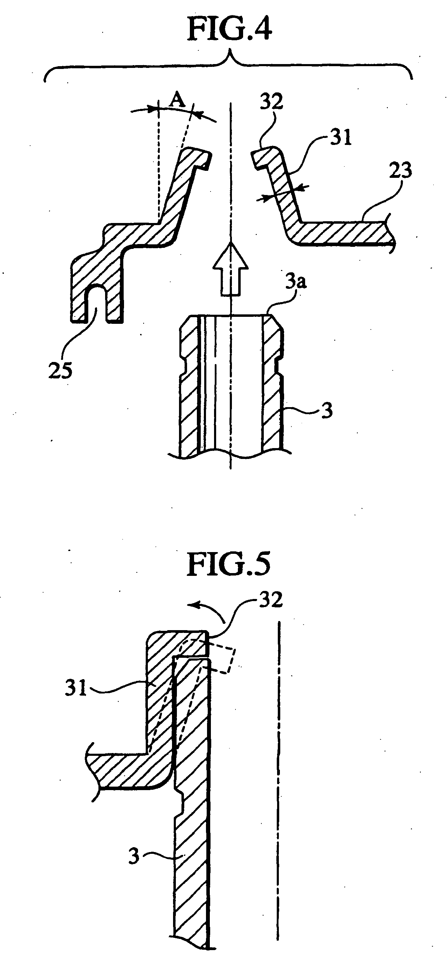

FIGS. 4 and 5 show another embodiment of the present invention. In the embodiment, the cylindrical portion 31 of the cover 23 is thinner than the other portion of the cover 23 and its tip is inclined toward shaft 3 in a free state.

The inclination A is sufficiently made to an extent of, for example, about 0.1 mm toward the shaft 3. By properly providing the inclination A, when the shaft 3 is inserted in the cylindrical portion 31, as shown by a broken line to a solid line in FIG. 5, the cylindrical portion 31 is pressed by the shaft 3 and deformed outward. Since the restoring force is stored in the cylindrical portion 31 by the deformation, the cylindrical portion 31 is fit to the outer surface of the shaft 3 more closely by the restoring force. Therefore, the entry of water can be prevented more reliably.

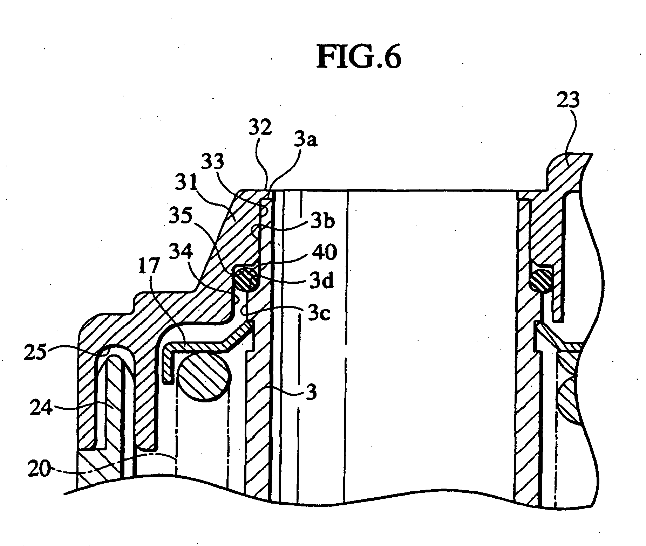

Fig. 6 shows further another embodiment. The embodiment is different only with respect to the point that an O-ring 40 is interposed between the cylindrical portion 31 and the shaft 3 and the other configuration is similar to that of the foregoing embodiment.

Concretely, the cylindrical portion 31 includes, in its inner surface, a small-diameter inner cylindrical portion 33 whose upper end is linked to the end portion cover 32, a large-diameter cylindrical portion 34, formed below the small-diameter inner cylindrical portion 33, having a diameter larger than that of the small-diameter inner cylindrical portion 33, and a cylinder-side step 35 formed in a portion of the border between the small-diameter inner cylindrical portion 33 and the large-diameter inner cylindrical portion 34. On the other hand, the tip portion of the shaft 3 which is fitted in the cylindrical portion 31 has, in its outer surface, a small-diameter outer cylindrical portion 3b whose upper end is linked to the penetration end surface 3a, a large-diameter outer cylindrical portion 3c formed below the small-diameter outer cylindrical portion 3b and having a diameter larger than that of the small-diameter outer cylindrical portion 3b, and a shaft-side step 3d formed in a portion of the border between the small-diameter outer cylindrical portion 3b and the large-diameter outer cylindrical portion 3c.

The small-diameter outer cylindrical portion 3b is inserted to the O-ring 40, and the O-ring 40 is attached between the cylinder-side step 35 and the shaft-side step 3d so as to be closely fit to the outer surface of the small-diameter outer cylindrical portion 3b and the inner surface of the large-diameter inner cylindrical portion 34.

In the configuration, the cylindrical portion 31 and the shaft 3 are engaged with each other while permitting a relative positional deviation in the axial direction. The O-ring 40 permits the positional deviation and is closely attached to the cylindrical portion 31 and the shaft 3 in the direction orthogonal to the axis direction. With the configuration, the close contact part between the cylindrical portion 31 and the shaft 3 becomes a portion between the small-diameter inner cylindrical portion 33 and the small-diameter outer cylindrical portion 3b and the interpose portion of the O-ring 40. With the close contact portions, the inclination of the shaft 3 is effectively suppressed, the operability of the mirror can be remarkably improved, and the waterproof function can be also further improved.

Further, in the configuration, by using the O-ring 40, stacking assembly can be performed. Consequently, automation of assembly and reduction in the number of assembling steps can be realized and, moreover, facilitation of the assembly can be also realized.

The present invention is not limited to the foregoing embodiments but can be variously modified. For example, elastic resins may be laminated on the inner surface of the cylindrical portion 31 so that the laminated elastic resins come into close contact with the outer surface 3f of the shaft 3. In this case, by forming the laminated elastic resin and resin for making the cover 23 in two colors, the device can be manufactured more easily.

### Industrial Applicability

According to the present invention, because of the waterproof structure that the cylindrical portion formed in the cover engages with the outer surface of the shaft and the end covering part covers the penetration end surface of the shaft, the length in the axial direction can be shortened and the shaft can be made shorter. Also, since overlapping of the shaft is easy, assembly is easy with a simple structure and the entry of water to the motor can be reliably prevented.

According to the present invention, the shaft is held by the cover via the cylindrical portion, so that the inclination is suppressed and operability of the mirror can be improved. Moreover, the cover does not exert any adverse influence on the operation of the mirror. Thus, high quality regarding the waterproof property and the operability of the mirror can be stably obtained.

According to the present invention, at the time of making the shaft penetrate the cylindrical portion, the restoring force is stored in the cylindrical portion, so that the cylindrical portion reliably closely comes into contact with the outer surface of the shaft and the entry of water can be reliably prevented.

According to the present invention, the cylindrical portion and the shaft are fit while permitting a relative positional deviation in the axial direction. The O-ring permits, however, the positional deviation and is in close contact with the cylindrical portion and the shaft in the direction orthogonal to the axial direction. Therefore, the inclination of the shaft can be effectively suppressed, the operability of the mirror can be remarkably improved, and the waterproof function can be further improved.

Further, by using the O-ring, the stacking assembly can be performed. Consequently, automation of assembly and reduction in the number of assembling steps can be realized and, moreover, facilitation of the assembly can be also realized.

## Claims

1. A mirror device for a vehicle, comprising:
a hollow shaft (3) that is provided with a mirror base (1) to be fixed to a vehicle body;
a housing (5) which houses a motor (6) for swinging a mirror unit (4) between a use position and a fold position and is turnably supported by the shaft (3) penetrating the housing (5); and a cover (23, 31, 32) for covering the housing (5) to thereby seal an inside of the housing (5),
**characterized in that**
the cover (23, 31, 32) includes a cylindrical portion (31) which extends in the axial direction of the shaft (3) and engages with the outer surface (3f) of the shaft (3) when the shaft (3) is inserted into the housing (5), and an end portion cover (32) which bends in a first direction substantially perpendicular to the axial direction of the shaft (3), from a tip of the cylindrical portion (3f) and ends in the first direction in such a manner as to cover a penetration end surface (3a) of the shaft (3).

2. The mirror device for a vehicle according to claim 1, wherein the tip of the cylindrical portion (31) is inclined toward the shaft (3) in a free state.

3. The mirror device for a vehicle according to claim 1, wherein an O-ring(40) is interposed between the cylindrical portion (31) and the shaft (3).

## Patentansprüche

1. Spiegelvorrichtung für ein Fahrzeug, die umfasst:
eine Hohlwelle (3), die mit einem Spiegelträger (1) versehen ist, der an einer Fahrzeugkarosserie befestigt werden soll;
ein Gehäuse (5), das einen Motor (6) aufnimmt, mit dem eine Spiegeleinheit (4) zwischen einer Funktionsposition und einer eingeklappten Position geschwenkt wird, und das von der Welle (3), die in das Gehäuse (5) eindringt, drehbar getragen wird; und
eine Abdeckung (23, 31, 32), die das Gehäuse (5) abdeckt, um so einen Innenraum des Gehäuses (5) abzudichten,
**dadurch gekennzeichnet, dass**
die Abdeckung (23, 31, 32) einen zylindrischen Abschnitt (31), der sich in der axialen Richtung der Welle (3) erstreckt und mit der Außenfläche (3f) der Welle (3) in Eingriff kommt, wenn die Welle (3) in das Gehäuse (5) eingeführt wird, und eine Endabschnitt-Abdeckung (32) enthält, die sich in einer ersten Richtung im Wesentlichen senkrecht zu der axialen Richtung der Welle (3) von einem vorderen Ende des zylindrischen Abschnitts (3f) aus biegt und in der ersten Richtung so endet, dass sie eine Eindring-Endfläche (3a) der Welle (3) abdeckt.

2. Spiegelvorrichtung für ein Fahrzeug nach Anspruch 1, wobei das vordere Ende des zylindrischen Abschnitts (31) in einem freien Zustand zu der Welle (3) hin geneigt ist.

3. Spiegelvorrichtung für ein Fahrzeug nach Anspruch 1, wobei ein O-Ring (40) zwischen dem zylindrischen Abschnitt (31) und der Welle (3) angeordnet ist.

## Revendications

1. Rétroviseur pour véhicule, comprenant :
une tige creuse (3) qui est pourvue d'une base de miroir (1) à fixer sur un corps de véhicule ;
un boîtier (5) qui loge un moteur (6) destiné à faire osciller une unité de miroir (4) entre une position d'utilisation et une position de pliage et est supporté de manière rotative par la tige (3) pénétrant dans le boîtier (5) ; et un couvercle (23, 31, 32) destiné à recouvrir le boîtier (5) pour sceller de ce fait un intérieur du boîtier (5),
**caractérisé en ce que**
le couvercle (23, 31, 32) comporte une partie cylindrique (31) qui s'étend dans la direction axiale de la tige (3) et se met en prise avec la surface externe (3f) de la tige (3) lorsque la tige (3) est insérée à l'intérieur du boîtier (5), et un couvercle de partie d'extrémité (32) qui fléchit dans une première direction sensiblement perpendiculaire à la direction axiale de la tige (3), depuis une pointe de la partie cylindrique (3f) et termine dans la première direction de manière à recouvrir une surface d'extrémité de pénétration (3a) de la tige (3).

2. Rétroviseur pour véhicule selon la revendication 1, dans lequel le bout de la partie cylindrique (31) est incliné vers la tige (3) dans un état libre.

3. Rétroviseur pour véhicule selon la revendication 1, dans lequel un joint torique (40) est interposé entre la partie cylindrique (31) et la tige (3).
